# EUROPEAN PATENT APPLICATION

(11) **EP 2 637 083 A1**
(43) Date of publication of application: **11.09.2013**
(21) Application number: 11835582.5
(22) Date of filing: 22.09.2011
(51) Int. Cl.: G06F 3/048

(54) **METHOD AND DEVICE FOR DISPLAYING STARTUP INTERFACE OF MULTIMEDIA TERMINAL**

(30) Priority: 28.10.2010 CN 201010523589
(71) Applicant: ZTE Corporation, Shenzhen, Guangdong 518057 (CN)
(72) Inventor: LI, Xianjun, Shenzhen Guangdong 518057 (CN)
(74) Representative: Wilson Gunn
(86) International application number: PCT/CN2011/080065
(87) International publication number: WO 2012/055309

(57) **Abstract**

A method and a device for displaying a start-up interface of a multimedia terminal are provided. The method includes: generating start-up interface data according to a picture and configuration information provided by a user and saving the generated data in a storage module; reading by a searching module the start-up interface data from the storage module to a memory; extracting a start-up interface picture from the start-up interface data; and displaying by a display module the start-up interface picture on a screen. The method and the device therefore provide display with different resolutions for a multimedia start-up interface, and realize customization of the start-up interface picture and start-up state information.

## Description

### TECHNICAL FIELD

The disclosure relates to multimedia video display technology, and more particularly to a method and a device for displaying a start-up interface of a multimedia terminal.

### BACKGROUN

It may take some time for system start-up of a multimedia product, and a start-up interface needs to display the process that a system starts information to a user during the start-up. A user can learn the system start-up progress and state from the start-up interface intuitively.

A method for displaying a start-up interface relates directly to the user experience on the product. Generally, a logo of a manufacturer or a designer, together with a progress bar is displayed according to an existing display method. Although basic functions are provided, the existing method is no longer satisfactory to users as their demands increase. A single logo may make users feel boring and a single progress bar may fail to display the system start-up progress accurately.

### SUMMARY

The purpose of the disclosure is to provide a method and a device for displaying a start-up interface of a multimedia terminal to solve the problem that the existing method for displaying a start-up interface is monotonous and cannot be customized.

According to an aspect of the disclosure, a method for displaying a start-up interface of a multimedia terminal is provided. The method includes the following steps:
A: generating start-up interface data according to a picture and configuration information provided by a user, and saving the generated start-up interface data in a storage module;
B: reading, by a searching module, start-up interface data from the storage module to a memory;
C: extracting a start-up interface picture from the start-up interface data; and
D: displaying, by a display module, the start-up interface picture on a screen.

2. The method according to claim 1, further comprising a step of setting start-up interface header information for the start-up interface data before saving the generated start-up interface data in the storage module.

According to another aspect of the disclosure, a device for displaying a start-up interface of a multimedia terminal is provided, which includes:
a picture making module configured to generate start-up interface data according to a picture and configuration information provided by a user, and save the generated data in a storage module;
the storage module configured to store customized start-up interface data;
a searching module configured to read customized start-up interface data from the storage module to a memory;
a picture extracting module configured to extract a start-up interface picture from the start-up interface data;
a display module configured to display the start-up interface picture on a screen.

Compared with the existing technology, the disclosure has the following beneficial effect: the disclosure provides different resolutions for a multimedia start-up interface, realizes customization of a main start-up interface picture, a progress bar picture, a progress value picture and start-up state information, and greatly enhances the user satisfaction with the product.

### BRIEF DESCRIPTION OF THE DRAWINGS

Fig. 1 is a flowchart of a method for displaying a start-up interface of a multimedia terminal according to the disclosure;
Fig. 2 is a structural diagram of a device for displaying a start-up interface of a multimedia terminal according to the disclosure; and
Fig. 3 is a flowchart of a method for displaying a start-up interface of a multimedia terminal according to an embodiment of the disclosure.

### DETAILED DESCRIPTION

The preferred embodiments of the disclosure will be described in details below in combination with the accompanying drawings. It should be understood that, the preferred embodiments described below are only used for describing and explaining the disclosure instead of limiting the disclosure.

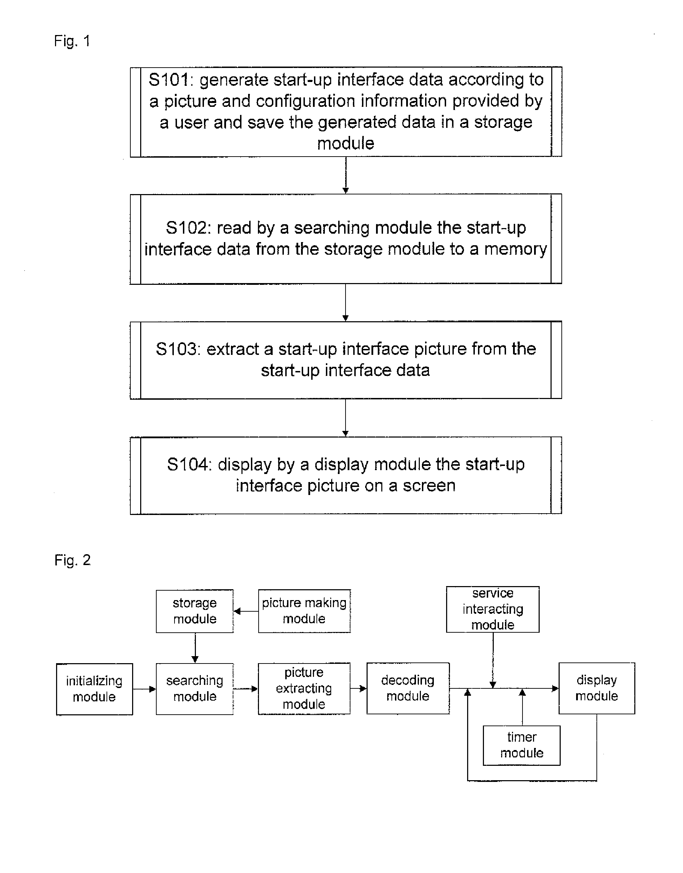

Fig. 1 shows a flowchart of a method for displaying a start-up interface of a multimedia terminal according to the disclosure. As shown in Fig. 1:
Step S101: start-up interface data is generated according to a picture and configuration information provided by a user and the generated data is saved in a storage module;
   after the user sets the start-up interface data, start-up interface header information is set for customized start-up interface data;
   the start-up interface data includes a start-up interface picture and configuration information, wherein the start-up interface picture includes: a main start-up interface picture, a progress bar picture, a progress value picture and a state information picture, and the configuration information includes: the coordinate and the alignment manner of a displayed picture, and information about whether to display a progress bar and a progress value;
   after the setting is finished, an initialization phase is started; a hardware video module is initialized first, and a memory required by a display memory and other resources required for displaying the start-up interface are applied for subsequently;
Step S102: a searching module reads the start-up interface data from the storage module to a memory after the initialization is finished;
   the searching module searches the storage module for corresponding start-up interface data according to the start-up interface header information which is set when the customization of the start-up interface data is performed, reads required data to a second memory if the required data is found, and releases the first memory resource if the required data is not found;
Step S103: a start-up interface picture is extracted from the start-up interface data stored in the memory; after the start-up interface picture is extracted, the start-up interface picture is decoded by a decoding module and then stored in a display memory;
Step S104: a display module displays the start-up interface picture on a screen and a system start-up phase is started.

Before this, a timer needs to be created to control the update time of the start-up interface picture and update a progress bar picture and a progress value picture when the timed time is up.

A main start-up interface picture is displayed on the interface. The length of the progress bar picture is displayed as 0 and a progress value picture is displayed as 0%. The start-up interface starts displaying and the system start-up phase is started, wherein the content, font and quantity of the state information, and the color and size of the progress bar picture etc. are determined when the customization of the start-up interface data is performed.

During the system start-up phase, the display module determines whether the system start-up phase is finished according to the current progress bar picture and progress value picture; the state information picture is updated and an application start-up phase is started if the system start-up phase is determined to be completed, and the progress bar picture and the progress value picture are updated regularly according to the timed time of the timer if the system start-up phase is determined to be not completed.

The application start-up phase is started after the system start-up phase is finished. The start-up interface displays a state information picture of the application start-up phase, and the display module determines whether the application start-up phase is finished according to the current progress bar picture and progress value picture; the state information picture is updated and start-up success information is displayed if the application start-up phase is determined to be completed, and the progress bar picture and the progress value picture are updated regularly according to the timed time of the timer if the application start-up phase is determined to be not completed.

After the start-up is finished, all memory resources applied during the start-up process are released, the display process of the start-up interface is ended and an application interface is displayed.

Fig. 2 is a structural diagram of a device for displaying a start-up interface of a multimedia terminal according to the disclosure. The device includes: a picture making module, a storage module, an initializing module, a searching module, a picture extracting module, a display module, a timer module, a decoding module and a service interacting module.

The picture making module generates start-up interface data according to a picture and configuration information provided by a user, saves the generated data in the storage module and sets start-up interface header information and related configuration for the start-up interface data;
the storage module is configured to store customized start-up interface data;
the initializing module is configured to initialize video hardware during initialization, and apply for a first memory required by a display memory and other resources required for displaying the start-up interface;
the searching module is configured to, after the initialization is finished, search the storage module for the storage location of the start-up interface data through the start-up interface header information and read the customized start-up interface data to a second memory;
the picture extracting module is configured to extract a start-up interface picture from the start-up interface data stored in the second memory and save the start-up interface picture to a display memory;
the display module is configured to display the read start-up interface picture in the display memory on a screen;
the timer module is configured to set the update time for the start-up interface picture and control the display module to update the progress bar picture and the progress value picture regularly;
the decoding module is configured to invoke a decoder library to decode the start-up interface picture after the start-up interface picture in the start-up interface data is extracted and save the decoded start-up interface picture in the display memory;
the service interacting module is configured to notify that execution of an application start-up phase is started after the system start-up phase is finished.

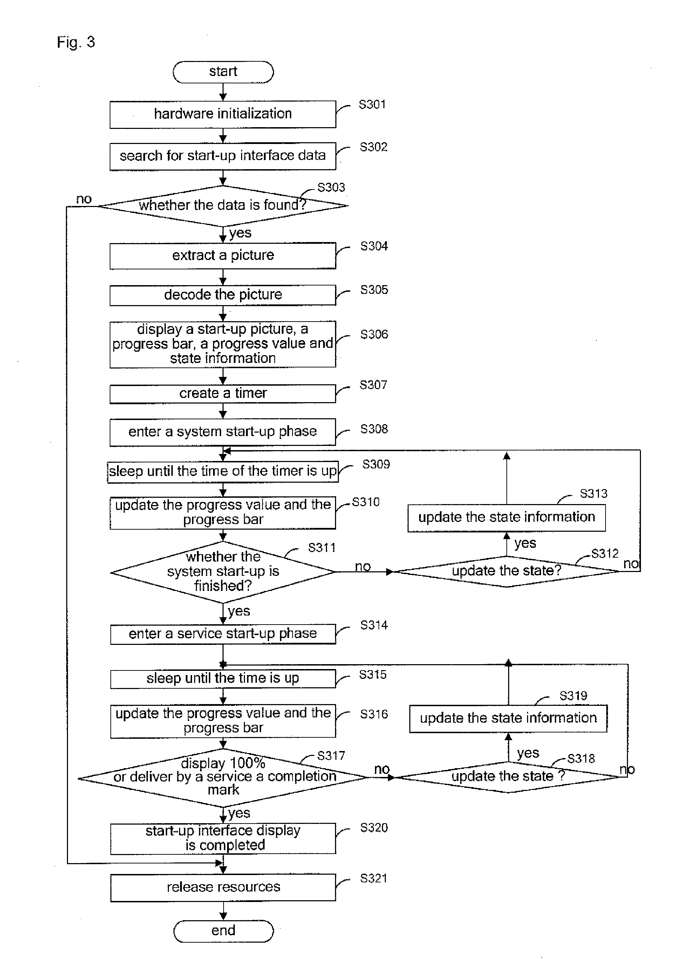

Fig. 3 shows a flowchart of a method for displaying a start-up interface of a multimedia terminal according to an embodiment of the disclosure. As shown in Fig. 3:
Step S301: a hardware video module is initiated, a first memory required by a display memory and other resources required for displaying of a start-up interface are applied for;
Step S302: start-up interface data is searched for in a storage module; the start-up interface data has start-up interface header information, including a mark, a data size and a Cyclic Redundancy Check (CRC) value etc; during the search process, the location and size of the start-up interface data are determined according to the start-up interface header information, i.e. the start-up interface header information part included in the start-up interface data structure and a start-up interface data part;
Step S303: whether the start-up interface data is found according to Step S302 is determined; if the start-up interface data is found, then the start-up interface data is read to a second memory; if the start-up interface data is not found or data check fails, then Step S321 is executed, the applied resources are released and the start-up interface fails to be displayed;
Step S304: a start-up interface picture is extracted from the start-up interface data, wherein the start-up interface picture includes a main start-up interface picture, a progress bar picture, a progress value picture and a state information picture;
Step S305: the main start-up interface picture, the progress bar picture, the progress value picture and the state information picture are decoded so as to be used by a display module;
Step S306: the start-up interface is displayed; the main start-up interface picture is displayed, the progress value is displayed as 0%, the state information is displayed as the state information of the system start-up state and the length of the progress bar is displayed as 0.
Step S307: a timer is created, the time of the timer is set and the progress bar picture and the progress value picture are updated when the time of the timer is up; the time interval of the timer is determined by a user when the customization of the start-up interface picture is performed and the information is reflected in the configuration information of the start-up interface data;
   wherein the content, font and quantity of the state information, and the color and size of the progress bar picture etc. are determined by the user when the picture customization is performed; the picture display format may be a high definition format or a standard definition format including the Phase Alternating Line (PAL) format, the National Television Standards Committee (NTSC) format, 720P, 10801 and 1080P etc.. In addition, there may be only two original main pictures: a standard definition picture for displaying standard definition formats including PAL and NTSC etc. and a high definition picture for displaying high definition formats including 720P, 10801 and 1080P etc.
Step S308 to Step S313: a system start-up phase (Step 308) is started.

According to the timed time of the timer (Step 309), the progress bar picture and the progress value picture (Step 310) are updated when the timed time is up. At the same time, according to the displayed percentage of the current progress bar picture or progress value picture, whether the system start-up phase is finished is determined (Step 311); if not finished, whether the state information needs to be updated is determined (Step 312); if update is not required, the current state is maintained until the timed time of the timer overflows (Step 309); if update is required, the state information is updated (Step 313) and then the timed time of the timer is waited to overflow (Step 309).

Step S314 to Step S320: an application start-up phase is started (Step 314) if the system start-up phase is finished according to the determination by Step S311.

The progress bar picture and the progress value picture are updated (Step 316) according to the timed time of the timer (Step 315). At the same time, if the displayed percentages of the current progress bar picture and the progress value picture are not 100% or a completion message is not delivered by a service (Step 317), whether the state information needs to be updated is further determined (Step 318), whether the state information needs to be updated is determined according to the configuration information of the start-up interface data. If the state does not need to be updated, the current state is maintained until the timed time of the timer overflows (Step 315); otherwise, the state information is updated (Step 319) and then the timed time is waited to overflow (Step 315). If the displayed percentages of the current progress bar picture and the progress value picture are 100% or a completion message is delivered by a service (Step 317), a completion mark is displayed on the screen.

Step S321: resources are released; all resources including the memory resources applied for during the start-up interface display process etc. are released; hereto, the start-up interface display process is finished and the system enters an application interface.

In addition, the start-up interface picture is made by a picture making tool and written to a mirror image in a flash. Among the picture making tools, a user may select an original start-up interface picture according to actual conditions. Objects for selection include a main start-up interface picture, a progress bar picture, a progress value picture and a state information picture. When a picture is made, the display coordinates of the start-up interface picture, the progress bar picture, the progress value picture and the state information picture may be regulated, and the display manner of the pictures can be set, including: central display, left-aligned display, right-aligned display, top-aligned display and bottom-aligned display.

To sum up, the disclosure has the following technical effect: the disclosure overcomes the problem that the existing method for displaying a start-up interface is monotonous and cannot be customized, and provides rich start-up interface display and display with different resolutions for a start-up interface, and realize configuration possibility of a start-up interface picture and coordinates etc.

Although the disclosure is described in details above, the disclosure is not limited thereby. Those skilled in the art may make various modifications according to the principle of the disclosure. Therefore, any modifications made according to the principle of the disclosure shall fall into the protection scope of the disclosure.

### INDUSTRIAL APPLICABILITY

A method and a device for displaying a start-up interface of a multimedia terminal according to the disclosure provide display with different resolutions for a multimedia start-up interface, realize customization of a main start-up interface picture, a progress bar picture, a progress value picture and start-up state information, and greatly enhance the user satisfaction with the product.

## Claims

1. A method for displaying a start-up interface of a multimedia terminal, comprising the following steps:
A: generating start-up interface data according to a picture and configuration information provided by a user, and saving the generated start-up interface data in a storage module;
B: reading, by a searching module, start-up interface data from the storage module to a memory;
C: extracting a start-up interface picture from the start-up interface data; and
D: displaying, by a display module, the start-up interface picture on a screen.

2. The method according to claim 1, further comprising a step of setting start-up interface header information for the start-up interface data before saving the generated start-up interface data in the storage module.

3. The method according to claim 2, wherein the searching module searches for start-up interface data according to the start-up interface header information and reads start-up interface data to the memory.

4. The method according to claim 3, wherein the start-up interface picture comprises a main start-up interface picture, a progress bar picture, a progress value picture and a state information picture which are set for a system start-up phase and an application start-up phase; the configuration information comprises a display coordinate and a display manner of the start-up interface picture.

5. The method according to claim 4, further comprising a step of setting an update time for the start-up interface picture before the step D.

6. The method according to claim 5, further comprising the following steps after the step D:
when the start-up interface picture is displayed by the display module on the screen, entering a system start-up phase;
updating the progress bar picture and the progress value picture regularly in a timer overtime manner, and determining whether the system start-up phase is finished;
if the system start-up phase is determined to be not finished, then continuing to update the progress bar picture and the progress value picture regularly; and
if the system start-up phase is determined to be finished, then updating the state information picture, and entering the application start-up phase.

7. The method according to claim 6, wherein the application start-up phase comprises the following steps:
updating the progress bar picture and the progress value picture regularly in a timer overtime manner, and determining whether the application start-up phase is finished;
if the application start-up phase is determined to be not finished, then continuing to update the progress bar picture and the progress value picture regularly; and
if the application start-up phase is determined to be finished, then updating the state information picture.

8. The method according to claim 7, wherein after the system start-up phase is finished, the display module notifies through a service interacting module that execution of the application start-up phase is started.

9. A device for displaying a start-up interface of a multimedia terminal, comprising:
a picture making module configured to generate start-up interface data according to a picture and configuration information provided by a user, and save the generated data in a storage module;
the storage module configured to store customized start-up interface data;
a searching module configured to read customized start-up interface data from the storage module to a memory;
a picture extracting module configured to extract a start-up interface picture from the start-up interface data;
a display module configured to display the start-up interface picture on a screen.

10. The device according to claim 9, further comprising:
an initializing module configured to initialize video hardware, and apply for a memory required by a display memory;
a timer module configured to set an update time for the start-up interface picture and control the display module to update a progress bar picture and a progress value picture regularly;
a decoding module configured to decode a start-up interface picture after the start-up interface picture is extracted from the start-up interface data and to save the decoded start-up interface picture in the display memory; and
a service interacting module configured to notify that execution of an application start-up phase is started after a system start-up phase is finished.
